Europäisches Patentamt

**European Patent Office**

**Office européen des brevets**

(11) Veröffentlichungsnummer: **0 415 477 A2**

# EUROPÄISCHE PATENTANMELDUNG

(21) Anmeldenummer: 90202195.5

(22) Anmeldetag: 14.08.90

(51) Int. Cl.5: **H01B 1/10, C09C 1/04**

(30) Priorität: 01.09.89 DE 3929056

(43) Veröffentlichungstag der Anmeldung:
06.03.91 Patentblatt 91/10

(84) Benannte Vertragsstaaten:
**AT BE CH DE DK ES FR GB GR IT LI NL SE**

(71) Anmelder: **METALLGESELLSCHAFT Aktiengesellschaft**
**Reuterweg 14**
**W-6000 Frankfurt am Main(DE)**

Anmelder: **MITSUI MINING & SMELTING CO., LTD.**
**1-1, 2chome Nihombashi-Muromachi**
**Chuo-ku Tokyo(JP)**

(72) Erfinder: **Aderhold, Clemens, Dr.**
**Josef-Brocker-Dyk 143**
**W-4150 Krefeld(DE)**
Erfinder: **Griebler, Wolf-Dieter, Dr.**
**Zahnstrasse 25**
**W-4130 Moers 1(DE)**
Erfinder: **Hocken, Jörg, Dr.**

**Oberkasseler Strasse 45**
**W-4000 Dusseldorf 11(DE)**
Erfinder: **Rosin, Uwe**
**Moerser Strasse 180**
**W-4100 Duisburg 17(DE)**
Erfinder: **Rudolph, Günther, Dr.**
**Albert-Schweitzer-Strasse 5**
**W-6451 Neuberg 1(DE)**
Erfinder: **Hayashi, Takao**
**5-4-5 Sako-cho, Hikoshima**
**Shimonoseki-shi, Yamaguchi-ken(JP)**
Erfinder: **Sato, Norihiro**
**6-7-13, Sako-cho, Hikoshima**
**Shimoneseki-shi, Yamaguchi-ken(JP)**
Erfinder: **Hosoi, Manabu**
**194 Kamikomachi**
**Omiya-shi, Saitama-ken(JP)**
Erfinder: **Kasahara, Nobuyoshi**
**812-9, Mizuno**
**Sayama-shi, Saitama-ken(JP)**

(74) Vertreter: **Rieger, Harald, Dr.**
**Reuterweg 14**
**W-6000 Frankfurt a.M.(DE)**

(54) Elektrisch leitfähiges Zinksulfid-Pulver und Verfahren zu seiner Herstellung sowie dessen Verwendung.

(57) Die Erfindung betrifft ein elektrisch leitfähiges Pulver aus mit einem elektrisch leitfähigen Überzug aus Kupfersulfid versehenen Zinksulfid-Teilchen. Die Zinksulfid-Teilchen weisen eine spezifische Oberfläche (BET) von 2 bis 10 $m^2/g$ auf und besitzen eine Reinheit von mindestens 97 %. Das elektrisch leitfähige Zinksulfid-Pulver wird insbesondere zur antistatischen Ausrüstung von Kunststoffen, Synthesefasern und Laminatpapieren verwendet.

EP 0 415 477 A2

Fig.1

1   in $NH_3$ aq
2   in $H_2SO_4$
3   Pulvermischung
4   in EDTA

## ELEKTRISCH LEITFÄHIGES ZINKSULFID-PULVER UND VERFAHREN ZU SEINER HERSTELLUNG SOWIE DESSEN VERWENDUNG

Die Erfindung betrifft ein elektrisch-leitfähiges Zinksulfid-Pulver sowie ein Verfahren zu dessen Herstellung.

Die elektrisch isolierenden Eigenschaften von Kunststoffen sind bekannt. In zunehmendem Maße wird jedoch auch eine gewisse elektrische Leitfähigkeit von Kunststoffen für besondere Anwendungen gefordert. Neben der Abschirmung elektronischer Bauelemente von äußeren, elektromagnetischen Feldern (z.B. im Fall von Computergehäusen) sind dies insbesondere Anwendungsfälle, in denen statische Elektrizität abgeleitet werden soll. Beispielhaft seien hier genannt die Verpackungsindustrie (z.B. Lagerung von Sprengstoffen, IC-Schaltelementen etc.), antistatisch ausgerüstete medizinische Gummiwaren, antistatisch ausgerüstete Teppichböden, antistatische "Clean Rooms", elektrisch leitfähige verbindende Metallklebstoffe. Elektrisch leitfähige bzw. mit einem elektrisch leitfähigen Oberflächenfilm versehene Kunststoffteile können auch elektrostatisch lackiert werden.

Es ist bekannt, die elektrische Leitfähigkeit von Polymeren durch Zusatz von leitfähigen Partikeln herbeizuführen. Beispielsweise eignen sich Metall- oder Rußpartikel, halbleitende Oxide wie Zinkoxid oder Iodide wie Kupferjodid zum Einsatz.

In aller Regel sind die mit handelsüblichen Additiven gefüllten Polymere wegen ihres Gehalts an Ruß- oder Metallpartikeln schwarz gefärbt, was in vielen Fällen nicht erwünscht ist. Mit z.B. Zinkoxid gefüllte Polymere sind hinsichtlich ihrer elektrischen Leitfähigkeit nicht stabil, mit z.B. Kupferjodid gefüllte Polymere nicht ausreichend inert. Mit Antimon dotiertes Zinnoxid ist toxikologisch nicht unbedenklich. Es ist auch aus EP-PS 025 583 bekannt, Titandioxid-Teilchen mit einer Überzugsschicht zu versehen, die aus mit Antimon dotiertem Zinnoxid besteht. Das vorbekannte weiße elektrisch leitfähige Pulver kann durch Zusatz von Farbstoffen oder Pigmenten in ein farbiges elektrisch leitfähiges Pigment überführt werden.

Auch die elektrische Leitfähigkeit von Kupfersulfid ist zwar seit langem bekannt, jedoch steht sein recht hoher Preis einer breiteren Anwendung als antistatisches Additiv entgegen. Die nahezu schwarze Farbe reinen Kupfersulfids bedeutet darüber hinaus eine sehr große phänomenologische Nähe zu den weit billigeren, ebenfalls schwarzen Leitfähigkeitsrußen.

Der Erfindung liegt die Aufgabe zugrunde, ein elektrisch leitfähiges Pulver bereitzustellen, das eine stabile, elektrische Leitfähigkeit mit guter Dispergierbarkeit in Polymeren und Harzen verbindet und das in einfacher und wirtschaftlicher Weise herzustellen ist.

Die Erfindung löst die Aufgabe mit einem leitfähigen Pulver aus mit einem elektrisch leitfähigen Überzug beschichteten anorganischen Substratteilchen. Das elektrisch leitfähige Pulver enthält somit gemäß der vorliegenden Erfindung Zinksulfid-Teilchen, die mit einer Überzugsschicht aus Kupfersulfid versehen sind.

Das elektrisch leitfähige Pulver der Erfindung besteht gewichtsmäßig zum größten Teil aus dem relativ preiswerten Zinksulfid, welches insbesondere in Pigmentqualität eine enge Partikelgrößenverteilung mit sehr guter Dispergierbarkeit verbindet. Zudem wird durch Zinksulfid als Kern die nahezu schwarze Farbe des Kupfersulfids auf ein Mittelgrün aufgehellt. Der Gewichtsanteil des Kupfersulfids im elektrisch leitfähigen Pulver der Erfindung beträgt im allgemeinen 2 bis 30 Gew.-%, wobei ein Anteil von 6 bis 18 Gew.-% ein bevorzugter Bereich ist.

Das als Substrat bzw. Kern dienende Zinksulfid ist zweckmäßig ein solches von hoher Reinheit, wobei ein Reinheitsgrad von mindestens 97 % vorliegen soll. Produkte dieser Reinheit werden im allgemeinen zu Pigmentqualitäten aufgearbeitet. Das heißt, ZnS-Produkte in Pigmentqualität, wie sie bevorzugt für die Erfindung eingesetzt werden, haben eine spezifische Oberfläche von 1 bis 20 und vorzugsweise von 2 bis 10 m²/g (BET).

Die Kupfersulfid-Beschichtung wirkt sich in mehrfacher Hinsicht vorteilhaft aus. Obwohl der Kupfersulfid-Anteil vorzugsweise nur 6 bis 18 Gew.-% beträgt und damit erheblich zur Verminderung der Rohstoffkosten beiträgt, entsprechen die elektrischen Eigenschaften des Gesamtproduktes denen von reinem Kupfersulfid. Infolge einer vergleichsweise dünnen, im allgemeinen 1 bis 5 nm dicken Kupfersulfid-Schicht auf Zinksulfid ist ferner das gecoatete Produkt deutlich heller als reines Kupfersulfid (z.B. Hellbezugswert: Kupfersulfid 2,0; Zinksulfid, gecoatet mit 14 % Kupfersulfid, 19,8). Die günstigen Eigenschaften von Zinksulfid in Pigmentqualität, wie enge Partikelgrößenverteilung, gute Dispergierbarkeit, geringe Abrasivität, bleiben erhalten. Voraussetzung ist eine auch bei Anwendung Pigment-typischer Verfahren (Mahlung, Dispergierung etc.) vorhandene ausreichende Festigkeit der Kupfersulfid-Schicht auf dem Zinksulfid-Kern.

Die hervorragende Haftung einer Kupfersulfid-Schicht auf einem Zinksulfid-Grundkörper kann kristallchemisch gedeutet werden. Trotz unterschiedlicher Kristallstrukturen von Kupfersulfid und Zinksulfid existieren innerhalb der komplizierten Schichtstruktur des Kupfersulfids einzelne Ebenen (senkrecht zur hexagonalen c-Achse), die geometrisch optimal sowohl auf den Zinkblende- als auch auf den Wurtzit-Typ des Zinksulfids passen, selbst die jeweiligen Metall-Ion-/Sulfid-Ion-Abstände sind identisch. Hierdurch kann auch die mit REM- und TEM-Untersuchungen bestätigte, ausgezeichnete Homogenität der erzeugten Beschichtungen gedeutet werden. Aus diesem Grund ist darüber hinaus verständlich, warum trotz angenommener Epitaxie auf molekularer Ebene selbst bei dünnen aufgebrachten Kupfersulfid-Schichten die beobachteten Röntgenpulverlinien des Kupfersulfids sowohl nach Lage als auch nach Intensität mit denen der Reinsubstanz zusammenfallen.

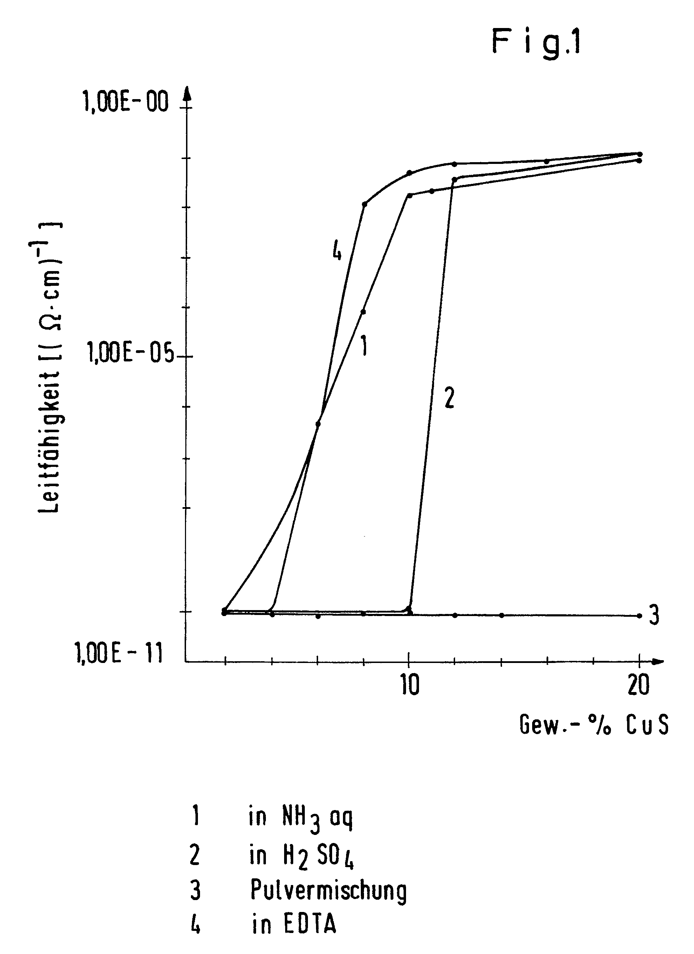

In diesem Zusammenhang wird auf das Diagramm der Figur 1 Bezug genommen. Das Diagramm veranschaulicht die Abhängigkeit der elektrischen Leitfähigkeit dreier mit Kupfersulfid beschichteter Zinksulfid-Pulver vom Gehalt an Kupfersulfid (Gew.-%). Eine Beschichtung des Zinksulfids mit Kupfersulfid wurde in saurem, eine zweite unter äquimolarem Zusatz von EDTA (Ethylendiamintetraacetat) bei pH 7 und eine weitere in basischem wäßrigen Medium hergestellt. Zum Vergleich ist die elektrische Leitfähigkeit von Pulvermischungen aus Kupfer- und Zinksulfid aufgeführt.

Die elektrische Leitfähigkeit von Pulvern wird an 1 bis 5 mm dicken Plättchen durch Messung des Durchgangswiderstandes gemessen. Hierzu werden die Pulver unter einem Druck von 90 bar zu Plättchen verpreßt und unter einem Druck der angelegten Elektroden von 2 bis 5 bar gemessen.

Das Basissubstrat der Pulver des Diagramms ist ein Zinksulfid von Pigmentqualität ($d_{50}$ - (Sedigraph) 0,37 $\mu$; spezifische Oberfläche 8 $m^2/g$). Dem Diagramm ist zu entnehmen, daß in beiden Fällen die spezifische elektrische Leitfähigkeit bei sehr kleinen Kupfersulfid-Gehalten gering ist, um dann ab 4 bis 12 Gew.-% CuS sprunghaft anzusteigen. Unter der Annahme einer homogenen Beschichtung errechnet sich hieraus eine Schichtdicke von ca. 3 nm. Unter der oben gemachten Annahme einer orientierten Aufwachsung senkrecht zur kristallographischen c-Achse des Kupfersulfids bedeutet dies eine für die elektrische Leitfähigkeit notwendige, minimale Schichtdicke von nur zwei Elementarzellen (E (CuS): a = 0,3792 nm; c = 1,634 nm).

Mit dieser notwendigen minimalen Schichtdicke kann der jeweils notwendige minimale Prozentsatz Kupfersulfid in Abhängigkeit des $d_{50}$-Wertes des eingesetzten Zinksulfids näherungsweise abgeschätzt werden. Unter der Annahme kugelförmiger Zinksulfid-Teilchen (spezifisches Gewicht ca. 4 $g/cm^3$) berechnet sich die zugehörige Oberfläche nach der Beziehung (1):

$$\text{Oberfläche } (m^2/g) = 1{,}5 / d_{50} \ (\, d_{50} \ (\mu) \,) \qquad (1)$$

Hieraus errechnet sich der minimale Anteil Kupfersulfid (spezifisches Gewicht 4,7 $g/cm^3$) bei einer gegebenen Schichtdicke von 3 nm näherungsweise nach der Beziehung (2):

$$\% \text{ CuS} = 2{,}26 / d_{50} \ (\, d_{50} \ (\mu) \,) \qquad (2)$$

In der technischen Praxis liegt der Bedarf an Kupfersulfid jedoch etwas höher, da die Zinksulfid-Teilchen selten ideal kugelförmig ausgebildet sind. Darüber hinaus trägt der vorhandene Feinanteil überproportional zur spezifischen Oberfläche bei. Bei sehr kleinen $d_{50}$-Werten hingegen liefert die vorgenannte Beziehung unvernünftige Werte (z.B. $d_{50} < 0{,}02 \ \mu$ liefert Prozentzahlen $> 100$), da einige vereinfachende Annahmen ihre Gültigkeit verlieren.

Die Erfindung betrifft des weiteren ein Verfahren zur Herstellung von elektrisch leitfähigen Zinksulfid-Teilchen. Dabei bedient sich das Verfahren der unterschiedlichen Löslichkeiten von Zinksulfid und Kupfersulfid (Löslichkeitsprodukte: $pK_L$ - (ZnS) = 21,7; $pK_L$ (CuS) = 40,2). Demgemäß besteht das Verfahren zur Herstellung von elektrisch leitfähigen Zinksulfid-Teilchen gemäß der Erfindung darin, daß man eine wäßrige Lösung oder Suspension eines Kupfersalzes vom pH-Wert 2 bis 12 und Zinksulfid-Teilchen unter lebhaftem Rühren vereinigt und die durch Oberflächenreaktion mit einem Kupfersulfid-Überzug versehenen Zinksulfid-Teilchen abtrennt und aufarbeitet. Bei der Vereinigung der Zinkkomponente und der Kupferkomponente entsprechend dem Verfahren der Erfindung kommt es zu einem an den Oberflächen der Zinksulfid-Partikel stattfindenden Ionenaustausch, wobei Zinkionen in Lösung gehen und Kupferionen sich abscheiden. Hierbei muß das Kupfersalz im wäßrigen Medium leichter löslich sein als das Kupfersulfid. Gleichzeitig muß dafür Sorge getragen werden, daß die in Lösung gegangenen Zinkionen mit keinem Bestandteil der Reaktionslösung eine unter den gewählten Bedingungen schwer-oder unlösliche Verbindung eingehen, da in diesem Fall das nach flüssig/fest-Separation erhaltene elektrisch leitfähige Pulver mit dieser unerwünschten Zinkverbindung verunreinigt wäre. Ferner muß die Konzentration freier Kupferionen den Wert von 2,8 . $10^{-28}$ g/l überschreiten (berechnet aus $pK_L$ (CuS) und $pK_L$ (ZnS). Die Konzentration von Zinksulfid ist im allgemeinen nicht eingeschränkt, sofern eine homogene Suspension hergestellt werden kann. Die ZnS-Konzentration liegt jedoch vorzugsweise im Bereich zwischen 20 g und 300 g/l.

Als Kupfersalze, die im Reaktionsmedium leichter löslich sind als Kupfersulfid, werden vorteilhaft Kupfer-II-salze eingesetzt. Insbesondere eignen sich Kupfer-II-salze von Mineralsäuren, beispielsweise deren Nitrate, Chloride, Sulfate. Kupfer-II-sulfat wird bevorzugt eingesetzt.

Die wäßrige Lösung enthält im allgemeinen das Kupfersulfat in einer Menge bis zu 754 g/l $CuSO_4 . 5 H_2O$, vorzugsweise in einer Menge von 5 bis 100 g/l $CuSO_4 . 5 H_2O$.

Die gewünschte Schichtdicke des Kupfersulfids auf dem Zinksulfid-Teilchen ergibt sich näherungsweise aus der Menge der zugegebenen Kupferverbindung, sowie der spezifischen Oberfläche des eingesetzten Zinksulfids.

Es ist für das Verfahren der Erfindung bei der Vereinigung der beiden Komponenten nicht kritisch, ob das Zinksulfid als solches oder als wäßrige Suspension in die wäßrige Lösung des Kupfersalzes eingetragen wird, oder ob eine wäßrige Lösung von Kupfersalz in eine Zinksulfid-Suspension eingetragen wird. In jedem Falle ist ein kräftiges Rühren und Homogenisieren der Suspension erforderlich.

Die für das Verfahren der Erfindung eingehaltene Temperatur liegt zwischen 10 und 110° C, ein Arbeiten bei erhöhter Temperatur beschleunigt jedoch die Reaktionsgeschwindigkeit erheblich. Zur Erzielung einer gleichmäßigen, fest haftenden Beschichtung wird ein anfängliches Rühren des Reaktionsgemisches bei Raumtemperatur bevorzugt, während im weiteren Verlauf die Temperatur auf 50 bis 80° C erhöht wird. Die Reaktionsgeschwindigkeit wird ebenfalls durch Zugabe von Komplexbildnern wie Ammoniumhydroxid oder EDTA (Ethylendiamintetraacetat), positiv beeinflußt. Gleichzeitig verhindern Komplexbildner die Ausfällung unerwünschter Produkte, wie Zink- oder Kupferhydroxid und verbessern gleichermaßen auch die Produktqualität.

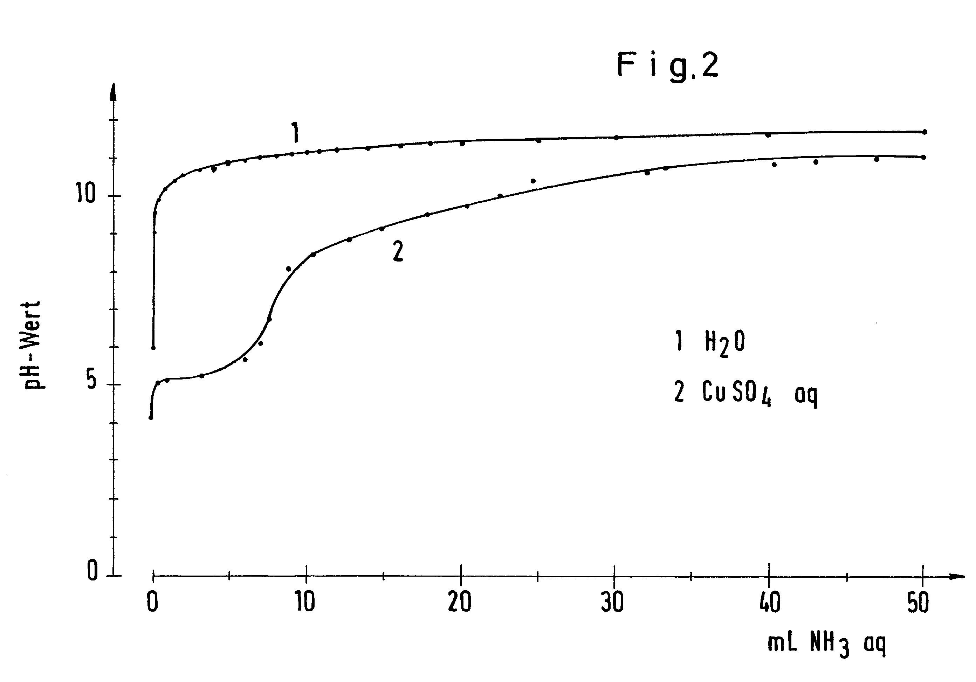

Das Diagramm der Figur 2 zeigt das Verhalten von Kupfersulfat-Lösungen bei Erhöhung des pH-Wertes mit Ammoniumhydroxid. Im Vergleichsversuch ist das entsprechende Verhalten von destilliertem Wasser veranschaulicht. Eine Erhöhung des pH-Wertes bewirkt zunächst die Bildung eines schwerlöslichen Niederschlags von basischem Kupfersulfat (das sich bedeutend langsamer zu Kupfersulfid umsetzt), ehe bei weiterer Zugabe von Ammoniak der tiefblaue Kupfertetrammin-Komplex gebildet wird. Das Verschwinden der blauen Farbe bietet eine Möglichkeit, den Endpunkt der Reaktion zwischen Zinksulfid und dem Kupfer-II-salz zu bestimmen. Um die Abscheidung unerwünschter Sekundär-Substanzen, wie Hydroxide oder Hydroxidhydrate verschiedener Stöchiometrie, ferner $ZnOCl_2$ bei Einsatz von $CuCl_2$ sowie $ZnSO_4 . 3 Zn-(OH)_2 . x H_2O$ bei Einsatz von $CuSO_4$ zu verhindern, wird zweckmäßig die kupferhaltige Lösung in die Zinksulfid-Suspension eingetragen, und zwar langsam und in solcher Weise, daß die Konzentration gelöster Kupferionen minimal bleibt. Man kann aber auch die Reaktion im sauren, vorzugsweise schwefelsauren Medium ausführen, wobei jedoch eine deutliche Erhöhung der Reaktionszeit eintritt.

Um eine Auflösung des Zinksulfids durch Basen oder Säuren zu verhindern, wird der pH-Wert des Reaktionsmediums auf Werte zwischen 2 und 12 eingestellt.

Für das Verfahren der Erfindung eignet sich als zu beschichtendes Substrat Zinksulfid handelsüblicher Qualität und einer Teilchengröße von 0,05 bis 5 μ. Vorzugsweise wird jedoch im Verfahren der Erfindung Zinksulfid in Pigmentqualität eingesetzt, das heißt Zinksulfid-Teilchen einer Korngröße von 0,2 bis 0,6 μ und einer spezifischen Oberfläche von 2 bis 10 m²/g. Bei der Verwendung kleinerer Teilchen steigt die notwendige Menge Kupfersulfid-Schicht drastisch an, ohne daß bei steigenden Kosten eine nennenswerte Erhöhung der elektrischen Leitfähigkeit resultiert. Beim Einsatz größerer Zinksulfid-Teilchen wird zwar der Anteil an Kupfersulfid verringert, die anwendungstechnischen Eigenschaften aber nachteilig beeinflußt.

Das elektrisch leitfähige Zinksulfid-Pulver der Erfindung eignet sich zur antistatischen Ausrüstung von beispielsweise Farben, Lacken, Anstrich- bzw. Beschichtungsmassen, Kunststoffen, Synthesefasern, Laminatpapieren, ferner zur Herstellung elektrisch leitfähiger Klebeverbindungen.

Die Erfindung weist Vorteile auf. Es wird ein Verfahren bereitgestellt, das in ebenso einfacher wie wirtschaftlicher und reproduzierbarer Weise die Herstellung eines elektrisch leitfähigen Zinksulfid-Pulvers ermöglicht, das bei hoher elektrischer Leitfähigkeit eine gute Dispergierbarkeit in Kunststoffen besitzt. Die mit dem elektrisch leitfähigen Zinksulfid-Pulver der Erfindung gefüllten Elastomere, thermoplastischen und duroplastischen Polymere können in hohem Maße antistatisch ausgerüstet werden.

Die Erfindung wird anhand der nachstehenden Beispiele näher und beispielhaft erläutert.

Beispiel 1

29,2 g $CuSO_4 . 5 H_2O$ wurden in 600 ml $H_2O$ gelöst und der pH-Wert mit konzentrierter Ammoniak-Lösung auf 9 eingestellt. Anschließend wurden 100 g ZnS in Pulverform ($d_{50}$1) 0,37 μm; spezifische Oberfläche 6,8 m².g BET-Methode) unter Rühren innerhalb von einer Minute eingetragen. Das entstehende Kupfersulfid stellt 11 % des Produktes dar. Die Suspension wurde 30 Min. bei Raumtemperatur und weitere 85 Min. bei 60° C gerührt. Der nach fest/flüssig-Trennung gewonnene

1) Zur Partikelgrößenanalyse diente in allen Beispielen ein Sedigraph Typ 5000 D der Firma Micrometrics.

Feststoff wurde bei 110°C getrocknet. Er besitzt eine spezifische elektrische Pulverleitfähigkeit von $1,9 \cdot 10^{-2} \ (\Omega \ cm)^{-1}$. Wird ZnS-Pulver zur Cu(II)-Lösung gegeben, befinden sich so gut wie kein S-Ionen in der Reaktionslösung. S-Ionen, die sich dem Löslichkeitsprodukt des ZnS entsprechend von der ZnS-Oberfläche bei Kontakt mit der Reaktionslösung ablösen, werden sofort (und damit noch nahezu an der ZnS-Oberfläche) als CuS wieder aufgefällt. Wird eine ZnS-Suspension verwendet, so liegen dem ZnS-Löslichkeitsprodukt folgend einige wenige gelöste S-Ionen vor. Nach deren Präzipitation als CuS entsprechen die Verhältnisse denen beim ZnS-Pulvereinsatz.

Beispiel 2

16,8 g $CuSO_4 \cdot 5 \ H_2O$ wurden in 600 ml $H_2O$ gelöst und der pH-Wert mit konzentrierter Ammoniaklösung auf 9 eingestellt. Anschließend wurden 100 g ZnS-Pulver ($d_{50}$: 0,37 $\mu$; spezifische Oberfläche: 6,8 $m^2/g$ BET-Methode) unter Rühren innerhalb einer Minute eingetragen. Das entstehende CuS beträgt 6,5 Gew.-% des Produktes. Die Suspension wurde 30 Min. bei Raumtemperatur und weitere 85 Min. bei 60°C gerührt. Nach fest/flüssig-Trennung und Waschen wurde das Produkt bei 110°C an Luft getrocknet. Die gemessene spezifische elektrische Pulverleitfähigkeit beträgt $4,7 \cdot 10^{-7} (\Omega \ cm)^{-1}$.

Beispiel 3

65,8 g $CuSO_4 \cdot 5 \ H_2O$ wurden in 800 ml $H_2O$ gelöst und der pH-Wert mit konzentrierter Ammoniaklösung auf 9 eingestellt. Anschließend wurden unter Rühren innerhalb einer Minute 100 g ZnS-Pulver ($d_{50}$: 0,37 $\mu$; spezifische Oberfläche: 6,8 $m^2/g$ BET-Methode) zugesetzt. Das entstehende Kupfersulfid stellt 25 % des Produktes dar. Die Suspension wurde 100 Min. bei Raumtemperatur und anschließend 21 Std. bei 60°C gerührt. Nach dem Abtrennen und Waschen des Produktes wurde es bei 95°C getrocknet. Die spezifische elektrische Pulverleitfähigkeit beträgt $9,2 \cdot 10^{-2} (\Omega \ cm)^{-1}$.

Beispiel 4

5,4 g $CuSO_4 \cdot 5 \ H_2O$ wurden in 600 ml $H_2O$ gelöst und mit konzentrierter Ammoniaklösung wurde der pH-Wert auf 9 eingestellt. Anschließend wurden bei Raumtemperatur unter Rühren 100 g ZnS-Pulver ($d_{50}$: 0,37 $\mu$; spezifische Oberfläche: 6,8 $m^2/g$ BET-Methode) eingetragen. Die Suspension wurde 30 Min. bei Raumtemperatur und anschließend weitere 65 Min. bei 60°C gerührt. Danach wurde der Feststoff von der Flüssigkeit abgetrennt, gewaschen und bei 110°C an Luft getrocknet. Eine spezifische elektrische Pulverleitfähigkeit war bei einem CuS-Anteil von 2 Gew.-% nicht meßbar ($< 10^{-9} \ (\Omega \ cm)^{-1}$).

Beispiel 5

11 g $CuSO_4 \cdot 5 \ H_2O$ wurden in 1000 ml $H_2O$ gelöst. Der pH-Wert wurde mit konzentrierter $H_2SO_4$ auf 3 gesenkt. Anschließend wurden 100 g ZnS-Pulver ($d_{50}$: 0,3 $\mu$; spezifische Oberfläche: 8 $m^2/g$ BET-Methode) unter Rühren innerhalb einer Minute eingetragen. Die Suspension wurde 90 Min. bei Raumtemperatur und anschließend 28 Std. bei 60°C gerührt, im folgenden gewaschen und bei 110°C getrocknet. Die entstandene Kupfersulfid-Schicht stellt 4 % des Produktes dar. Eine spezifische elektrische Pulverleitfähigkeit war nicht meßbar ($< 10^{-9} \ (\Omega \ cm)^{-1}$).

Beispiel 6

35,9 g $CuSO_4 \cdot 5 \ H_2O$ wurden in 1000 ml $H_2O$ gelöst und der pH-Wert mit konzentrierter $H_2SO_4$ auf 3 gesenkt. In die Lösung wurden 100 g ZnS-Pulver ($d_{50}$: 0,3 $\mu$; spezifische Oberfläche: 8 $m^2/g$ BET-Methode) unter Rühren innerhalb einer Minute eingetragen. Die Suspension wurde 150 Min. bei Raumtemperatur, anschließend 53 Std. bei 60°C und weitere 5 Std. bei 80°C gerührt. Nach Filtration, Waschung und Trocknung (110°C) betrug die spezifische Pulverleitfähigkeit $3,0 \cdot 10^{-2} (\Omega \ cm)^{-1}$. Das entstandene Kupfersulfid stellt 13,5 Gew.-% des Produktes dar.

Beispiel 7

65,8 g $CuSO_4 \cdot 5 \ H_2O$ wurden in 1000 ml $H_2O$ gelöst und der pH-Wert mit konzentrierter $H_2SO_4$ auf 3 abgesenkt. Es wurden 100 g ZnS-Pulver ($d_{50}$: 0,3 $\mu$; spezifische Oberfläche: 8 $m^2/g$) unter Rühren innerhalb einer Minute eingetragen. Die Suspension wurde 150 Min. bei Raumtemperatur, anschließend 67 Std. bei 60°C und weitere 7 Std. bei 80°C gerührt. Nach anschließender fest/flüssig-Trennung, Waschung und Trocknung (110°C) betrug die spezifische elektrische Pulverleitfähigkeit $1,3 \cdot 10^{-1} \ (\Omega \ cm)^{-1}$. Der Anteil der Kupfersulfidbeschichtung im Zinksulfidpulver betrug 25 %.

Beispiel 8

5,4 g $CuSO_4 \cdot 5\, H_2O$ wurden in 1500 ml $H_2O$ gelöst und der pH-Wert mit konzentrierter Ammoniaklösung auf 10 eingestellt. Anschließend wurden 100 g ZnS-Pulver ($d_{50}$: 0,3 $\mu$; spezifische Oberfläche: 8 $m^2/g$) unter Rühren innerhalb einer Minute eingetragen. Die Suspension wurde 30 Min. bei Raumtemperatur und weitere 210 Min. bei 60° C gerührt. Innerhalb dieser 210 Min. wurden 30,5 g $CuSO_4 \cdot 5\, H_2O$, gelöst in 250 ml $H_2O$ langsam zugetropft, so daß die Konzentration an gelöstem Kupfer in der Suspension stets minimal blieb. Das Endprodukt enthielt einen Kupfersulfid-Anteil von 13,5 %. Das gewaschene und getrocknete Produkt hatte eine elektrische Pulverleitfähigkeit von $1,5 \cdot 10^{-1}$ $(\Omega\ cm)^{-1}$.

Die Abscheidung von Sekundärsubstanzen, wie $Cu(OH)_x(SO_4)_y \cdot z\, H_2O$ wird durch Zusatz von Komplexbildner praktisch vermieden. Bei Röntgenpulveruntersuchungen an diesem Produkt traten zusätzliche Beugungsmaxima neben denen von CuS und ZnS nicht auf.

Beispiel 9

35,9 g $CuSO_4 \cdot 5\, H_2O$ wurden in 750 ml $H_2O$ gelöst und der pH-Wert mit konzentriertem Ammoniak auf 10 angehoben. 100 g ZnS-Pulver (spezifische Oberfläche 75 $m^2/g$, Primärpartikelgröße ca. 0,03 $\mu$) wurden unter Rühren innerhalb einer Minute zugesetzt. Die Suspension wurde 17 Std. bei Raumtemperatur gerührt. Anschließend wurde das Produkt gewaschen und getrocknet (110° C). Die spezifische elektrische Pulverleitfähigkeit war nicht meßbar ($<10^{-9}$ $(\Omega\ cm)^{-1}$) bei einem Kupfersulfid-Anteil des Produktes von 13,5 %.

Beispiel 10

16.1 g $CuSO_4 \cdot 5\, H_2O$ wurden in 300 ml $H_2O$ gelöst. Sodann wurden 50 g ZnS-Pulver ($d_{50}$: 0,37 $\mu$; spezifische Oberfläche: 6,8 $m^2/g$ BET-Methode) unter Rühren in die Lösung eingetragen. Die Suspension wurde 18 Std. bei Raumtemperatur gerührt, anschließend noch bei 70° C bis zum Verschwinden der blauen Farbe des Cu-aquo-Komplexes. Das Produkt wurde abgetrennt, gewaschen und getrocknet. Die erreichte elektrische Pulverleitfähigkeit betrug $1,2 \cdot 10^{-1}$ $(\Omega\ cm)^{-1}$ bei einem Kupfersulfid-Anteil des Produktes von 12 %.

Beispiel 11

Jeweils 16,1 g $CuSO_4 \cdot 5\, H_2O$ wurden in jeweils 300 ml $H_2O$ gelöst und der pH-Wert mit konzentrierter Ammoniaklösung auf 9 eingestellt.

Es wurden jeweils 50 g ZnS-Pulver ($d_{50}$: 0,37 $\mu$; spezifische Oberfläche: 6,8 $m^2/g$ BET-Methode) unter Rühren innerhalb einer Minute zugesetzt. Die Suspension a) wurde 16 Std. bei 40° C, die Suspensionen b), c) und d) wurden 16 Std. bei Raumtemperatur gerührt. Anschließend wurde bis zur Entfärbung des Kupfertetrammin-Komplexes bei 40° C b), 60° C c) bzw. 80° C d) gerührt. Die Produkte wurden jeweils abgetrennt, gewaschen und bei 110° C gerührt. Die erreichten elektrischen Pulverleitfähigkeiten betrugen im einzelnen:

a) $2,8 \cdot 10^{-2}$ $(\Omega\ cm)^{-1}$
b) $2,3 \cdot 10^{-2}$ $(\Omega\ cm)^{-1}$
c) $1,1 \cdot 10^{-2}$ $(\Omega\ cm)^{-1}$
d) $2,9 \cdot 10^{-2}$ $(\Omega\ cm)^{-1}$

Der CuS-Anteil beläuft sich jeweils auf 12 %.

Beispiel 12

29 g $CuSO_4 \cdot 5\, H_2O$ und 43,4 g des Natriumsalzes der Ethylendiamintetraessigsäure wurden in 1000 ml Wasser gelöst und der pH-Wert mit konzentrierter Natronlauge auf 10 eingestellt. Anschließend wurden bei 60° C 111 g ZnS innerhalb einer Minute als Suspension (300 g/l) zugesetzt. Das entstehende Kupfersulfid stellt 10 % des Produktes dar. Die Suspension wurde 5 h bis zur vollständigen Umsetzung bei 60° C gerührt. Der nach fest/flüssig-Trennung gewonnene Feststoff wurde bei 110° C getrocknet. Er besitzt eine spezifische elektrische Pulverleitfähigkeit von $4,7 \cdot 10^{-2} (\Omega\ cm)^{-1}$.

**Ansprüche**

1. Elektrisch leitfähiges Pulver aus mit einem elektrisch leitfähigen Überzug beschichteten anorganischen Substratteilchen, dadurch gekennzeichnet, daß es mit einer Überzugsschicht aus Kupfersulfid versehene Zinksulfid-Teilchen enthält.

2. Elektrisch leitfähiges Pulver nach Anspruch 1, dadurch gekennzeichnet, daß die Zinksulfid-Teilchen eine spezifische Oberfläche (BET) entsprechend der Beziehung O ($m^2/g$) $\geq$ 1,5/d besitzen, worin d = $d_{50}$ des eingesetzten ZnS in $\mu$ bedeutet.

3. Elektrisch leitfähiges Pulver nach den Ansprüchen 1 bis 2, dadurch gekennzeichnet, daß die Zinksulfid-Teilchen eine spezifische Oberfläche (BET) von 2 bis 10 $m^2/g$ aufweisen.

4. Elektrisch leitfähiges Pulver nach den Ansprüchen 1 bis 3, dadurch gekennzeichnet, daß die Zinksulfid-Teilchen eine Reinheit von mindestens 97 % aufweisen.

5. Elektrisch leitfähiges Pulver nach den Ansprüchen 1 bis 4, dadurch gekennzeichnet, daß die Zinksulfid-Teilchen eine Kristallstruktur vom Wurtzit- und/oder Zinkblendetyp aufweisen.

6. Elektrisch leitfähiges Pulver nach den Ansprüchen 1 bis 5, dadurch gekennzeichnet, daß der Anteil an Kupfersulfid in Gewichts-% im Pulver der Beziehung Gew.-% CuS $\geq$ 2,3/d entspricht, worin d = $d_{50}$ des eingesetzten Zinksulfids in $\mu$ bedeutet.

7. Elektrisch leitfähiges Pulver nach den Ansprüchen 1 bis 6, dadurch gekennzeichnet, daß der Anteil an Kupfersulfid im Zinksulfid-Pulver 2 bis 30, vorzugsweise 6 bis 18 Gew.-% beträgt.

8. Elektrisch leitfähiges Pulver nach den Ansprüchen 1 bis 7, dadurch gekennzeichnet, daß die Dicke der Überzugsschicht 1 bis 5 nm beträgt.

9. Verfahren zur Herstellung von elektrisch leitfähigen Zinksulfid-Teilchen, dadurch gekennzeichnet, daß man eine wäßrige Lösung oder Suspension eines Kupfersalzes vom pH-Wert 2 bis 12 und Zinksulfid-Teilchen unter lebhaftem Rühren vereinigt und die durch Oberflächenreaktion mit einem Kupfersulfid-Überzug versehenen Zinksulfid-Teilchen abtrennt und aufarbeitet.

10. Verfahren nach Anspruch 9, dadurch gekennzeichnet, daß das Kupfersalz in wäßrigem Medium leichter löslich ist als Kupfersulfid.

11. Verfahren nach den Ansprüchen 9 und 10, dadurch gekennzeichnet, daß ein Kupfer-II-salz verwendet wird.

12. Verfahren nach den Ansprüchen 9 bis 11, dadurch gekennzeichnet, daß Kupfersulfat verwendet wird.

13. Verfahren nach den Ansprüchen 9 bis 12, dadurch gekennzeichnet, daß eine wäßrige Lösung mit bis zu 754 g/l $CuSO_4.5\ H_2O$ verwendet wird.

14. Verfahren nach den Ansprüchen 9 bis 13, dadurch gekennzeichnet, daß eine Reaktionstemperatur zwischen 10°C und 110°C eingehalten wird.

15. Verfahren nach den Ansprüchen 9 bis 14, dadurch gekennzeichnet, daß Zinksulfid von Pigment-Qualität verwendet wird.

16. Verwendung des elektrisch leitfähigen Zinksulfid-Pulvers nach den Ansprüchen 1 bis 15 zur antistatischen Ausrüstung von Kunststoffen, Synthesefasern, Laminatpapieren, zur Herstellung elektrisch leitfähiger Klebstoffzusammensetzungen oder zur Erzeugung von Anstrichmassen mit antistatischen Eigenschaften.

F i g.1

1    in $NH_3$ aq
2    in $H_2SO_4$
3    Pulvermischung
4    in EDTA

F i g.2

1 H₂O

2 CuSO₄ aq

EP 0 415 477 A2